# EUROPEAN PATENT SPECIFICATION

(11) **EP 1 126 305 B1**
(45) Date of publication and mention of the grant of the patent: **23.04.2003**
(21) Application number: 01830085.5
(22) Date of filing: 09.02.2001
(51) Int. Cl.: G02B 26/02

(54) **Electrostatic microshutter matrix having a high fill factor**
Elektrostatische Mikroverschluss-Matrix mit hohem Füllfaktor
Matrice de micro-obturateurs électrostatiques avec facteur de remplissage élevé

(30) Priority: 17.02.2000 IT TO200152
(43) Date of publication of application: 22.08.2001
(73) Proprietor: C.R.F. Società Consortile per Azioni, 10043 Orbassano (Torino) (IT)
(72) Inventor: Pizzi, Marco, c/o C.R.F. S. Consortile per Azioni, 10043 Orbassano (Torino) (IT)
(74) Representative: Notaro, Giancarlo

(56) References cited:
- US-A- 3 746 785
- US-A- 4 786 149
- US-A- 5 781 331

## Description

The present invention refers to electrostatically controlled microshutters.

Low-power, small-sized electrostatic motors suitable for use as actuators in microelectronic technology applications for operating mechanical devices and similar in conditions subject to vibration, such as in the automobile field for example, have already been produced in the past. These electrostatic actuators employ flexible, electrically conductive plates, also known as cilia, or petals, each with one end connected to a stator and the other end next to a motion translator. The application of voltage pulses between the petals and an electrode connected to the translator induces an electrostatic effect that causes the petals to adhere to the translator, resulting in latter moving with respect to the stator.

An actuator of the above-indicated type is, for example, described in "Prospects of the Employment of Synchrotron Radiation in film electrostatic actuator technology" by V. L. Dyatloc, V.V. Konyaskin, B.S. Potopov and Yu. A. Pyankov, Nuclear Instruments and Methods in Physics Research, A359 (1995), pages 394-395.

Devices with electrostatically controlled cilia have also been proposed in the past for realizing shutters in lighting and viewing devices. A microshutter of this type has, for example, been proposed in the Italian patent application TO98A001029 submitted by the same Applicant, still secret at the date of filing of this application. The previously proposed device includes a single, electrostatically controlled microshutter that includes:
a fixed support, including a substrate in the form of a thin plate,
an electrode composed of a thin film of electrically conductive material, applied to one side of the thin plate forming the substrate,
a dielectric or ferroelectric insulating film applied over the film forming the said electrode, and
a movable petal, composed of a thin film of material that is electrically conductive and elastically deformable, with only the part at one end rigidly connected to the said insulating film,
in which the said petal has an undeformed rest state, where only the said part at one end is in contact with the respective substrate, while the remainder of the petal is curved so that it is raised away from the substrate, and an operative, deformed position in which, due to the electrostatic effect following application of an electrical voltage between the said electrode and the said petal, the petal adheres completely to the insulating film, the said petal ready to return to the said undeformed rest position under the effect of its intrinsic elasticity when the voltage between the said electrode and said petal is removed.

The object of this invention is that of realizing a matrix of electrostatically controlled microshutters of the above described type, in which the microshutters forming the matrix can be controlled individually or in groups and which exhibits a high fill factor, that is a high ratio between the area through which light can pass when each microshutter is open and the total area of the device.

In order to achieve this objective, the object of the invention is a matrix of microshutters having a high fill factor, characterized in that it includes a number of microshutters arranged in a matrix, with rows and one or more columns, in which each microshutter includes:
- a fixed support, including
   a substrate in the form of a thin plate,
   an electrode composed of a thin film of electrically conductive material, applied to one side of the thin plate forming the substrate, and
- a movable petal, composed of a thin film of electrically conductive and elastically deformable material, with only the part at one end rigidly connected to the said insulating film,
in which the said petal has an undeformed rest state, where only the said part at one end is in contact with the respective substrate, while the remainder of the petal is curved so that that it is raised away from the substrate, and an operative, deformed position in which, due to the electrostatic effect following application of an electrical voltage between the said electrode and the said petal, the petal adheres completely to the insulating film, the said petal ready to return to the said undeformed rest position under the effect of its intrinsic elasticity when the voltage between the said electrode and said petal is removed, and in which the said microshutters are arranged in spaced-out rows, one above the other, with the substrates of the microshutters of each row mutually coplanar and parallel with the substrates of the microshutters of the adjacent rows.

Thanks to the above-described arrangement, when the microshutters are all in their operative positions, they leave the spaces between the parallel rows of microshutters completely open to allow light to pass through, and so the entire area occupied by the matrix remains substantially transparent for the passage of light, except for the zones occupied by the substrates of the various rows that, since they are arranged in planes parallel to the direction in which the light rays pass, present a minimum section that blocks the light. No additional medium needs to pass through the part open to the light, other than that which is being propagated (air, vacuum, ...).

The thin plate forming the substrate of each microshutter can be made of silicon, glass, plastic or a metallic material. Using a single row of microshutters, the thickness of the substrate could be a few millimetres. In the case where it is desired to produce a microshutter matrix having a high fill factor, the thickness of the substrate must be much smaller, in the order of 20-40 microns for example.

The layer of conductive material forming the electrode is applied on the substrate via evaporation, spin-coating, silkscreen printing or dipping and has a thickness of a few tens or hundreds of nanometres. The dielectric or ferroelectric insulation layer can have a thickness varying between 0.1 microns and a few tens of microns. This layer can also be obtained via silkscreen printing, vacuum deposition, spin-coating, dipping or, in the case of silicon, by oxidation.

The thickness of the metal film forming the petal can range from a few fractions of a micron to several microns. The petal could also be composed of silicon or a metallized plastic material.

The microshutter matrix can be electrically powered using means suitable for commanding the various microshutters individually. Partitioning can be effected both by electrically dividing the petals of a single line and by electrically dividing the electrodes associated with the various petals.

Additional characteristics and advantages of the invention will become evident in the description that follows, with reference to the attached drawings, which are supplied purely as a non limitative example, and where:
figure 1 is a schematic perspective of a microshutter matrix according to the invention,
figure 2 is a side view of the matrix in figure 1,
figure 3 is a side view as in figure 2, but showing the matrix in different operating state, and
figures 4 and 5 are large-scale sectional views of a single microshutter in the operating states of figure 2 and figure 3.

With reference to the drawings, number 1 indicates a matrix of microshutters 2 as a whole, these being arranged in a number of spaced-out rows, one above the other, with the supports 4 of the microshutters of each row parallel to the supports 4 of the microshutters 2 of the adjacent rows. With special reference to figure 4, the single microshutter 2 comprises a fixed support 4 including a substrate 5 in the form of a thin plate, a layer 6 acting as an electrode and an insulation layer 7. The substrate 5 is composed of silicon, or glass, or a metallic or plastic material. The preferable thickness of the substrate 5 is 20-40 microns. In implementations with just a single row of microshutters, this thickness could also be a few millimetres. A layer 6 of conductive material, a few tens or hundreds of nanometres thick and acting as an electrode, is applied on the substrate 5 via evaporation, spin-coating, silkscreen printing or dipping. The conductive layer is subsequently insulated with a dielectric or ferroelectric insulation layer, which can have a thickness varying between 0.1 microns and a few tens of microns. This layer can also be obtained via silkscreen printing, vacuum deposition, spin-coating, dipping or, in the case of silicon, by oxidation.

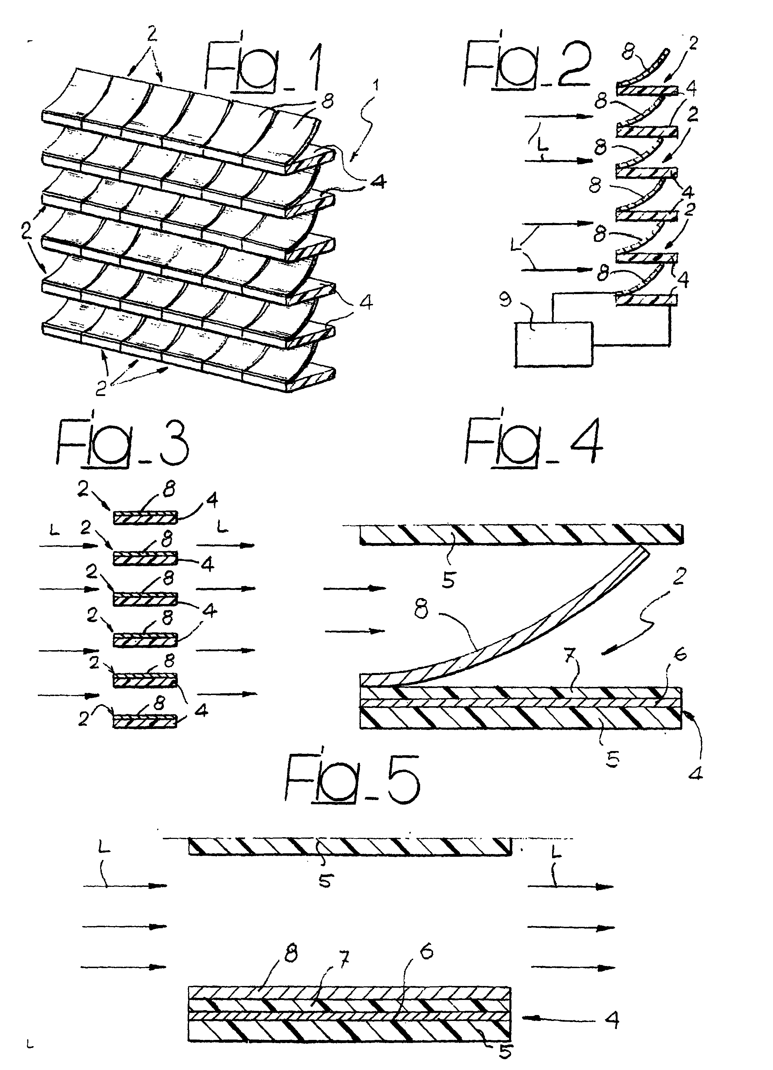

The movable part is composed of a petal 8, in the form of a metallic film with a thickness ranging from a few fractions of a micron to several microns. The petal 8 could also be composed of silicon or a plastic material with a metallized layer. One end of the petal 8 is fixed to the surface of the fixed support 4. A metallic film 8 is used that, in its undeformed configuration, has a curved shape such that the film remains in the raised position illustrated in figures 2 and 4, namely away from the respective fixed support 4, until an electrical voltage is applied.

As can be seen in figure 2, when the microshutters 2 are in their undeformed rest state, the respective petals 8 have their free ends in contact with the substrates 5 of the overhead row of microshutters. In this state therefore, the light rays L cannot pass through the matrix 1. The device is equipped with means 9 for feeding an electrical voltage between each electrode 4 and the respective petal 8. The application of a voltage induces an electrostatic effect that causes the each petal 8 to adhere to its respective fixed support 4 (figure 3). In this state, the spaces between adjacent rows of microshutters are completely open for the passage of light rays L (figure 3). Since the substrates 5 are arranged with their planes parallel to each other and parallel to the direction of the light rays L passing through, when the matrix is in the "open" state illustrated in figure 3, only the areas occupied by the individual substrates blocks the passage of light. Since these substrates are very thin, the matrix in accordance with the invention consequently exhibits a high ratio between the area that allows light to pass through and the total area of the matrix (fill factor). When the voltage pulse is removed, each microshutter returns to the rest state, illustrated in figure 4, under the inbuilt elasticity of the individual petals 8. As already indicated, the means of supplying electricity 9 can be arranged to individually feed the petal 8 and/or electrodes 6, thereby opening and closing the various microshutters 2 individually or in groups, and so realize all types of desired result.

Microshutter matrices realized according to the above-described principles can be used to advantage in various applications of optical devices, such as optical scanning and display devices.

Naturally, the principle of the invention being understood, the details of realization and the forms of implementation could be extensively changed with respect to that described and illustrated by way of example without leaving the scope of this invention.

## Claims

1. An electrostatic microshutter matrix having a high fill factor group, including a plurality of electrostatically controlled microshutters (2), arranged in a matrix with rows and one or more columns, in which each microshutter includes:
a fixed support (4), including
a substrate (5) in the form of a thin plate,
an electrode (6) composed of a thin film of electrically conductive material, applied to one side of the thin plate forming the substrate (5),
a dielectric or ferroelectric insulating film (7) applied over the film forming the said electrode (6), and
a movable petal (8), composed of a thin film of electrically conductive and elastically deformable material, with only the part at one end rigidly connected to the said insulation film (7),
in which the said petal (8) has an undeformed rest state, where only the said part at one end of the petal (8) is in contact with the respective substrate (5), while the remainder of the petal (8) is curved so that that it is raised away from the substrate, and an operative, deformed position in which, due to the electrostatic effect following application of an electrical voltage between the said electrode (6) and the said petal (8), the petal (8) adheres completely to the said insulation film (7), the said petal ready to return to the said undeformed rest position under the effect of its intrinsic elasticity when the voltage between the said electrode (6) and said petal (8) is removed,
in which the said microshutters (2) are arranged in rows, one above the other, with the substrates of the microshutters (2) of each row mutually coplanar and parallel with the substrates of the microshutters of the adjacent rows.

2. A microshutter matrix according to claim 1, **characterized in that** the thin plate forming the substrate (5) is made of a material chosen from a metallic material, plastic material, glass or silicon.

3. A microshutter matrix according to claim 1, **characterized in that** the said substrate (5) has a thickness ranging from a few microns to a few millimetres.

4. A microshutter matrix according to claim 3, **characterized in that** the thickness of the said substrate (5) is between 20 and 40 microns.

5. A microshutter matrix according to claim 1, **characterized in that** the said layer of conductive material forming the electrode (6) is realized via evaporation, spin-coating, silkscreen printing or dipping and has a thickness ranging between a few tens and a few hundreds of nanometres.

6. A microshutter matrix according to claim 1, **characterized in that** the said insulation layer (7) is obtained via silkscreen printing, vacuum deposition, spin-coating, dipping or, in the case of silicon, by oxidation.

7. A microshutter matrix according to claim. 1, **characterized in that** each petal (8) is composed of an entirely metallic sheet, or a sheet of silicon or plastic material with an additional metallized layer.

8. A microshutter matrix according to claim 1, **characterized in that** the means (9) of supplying an electrical voltage to the electrodes (6) and to the petals (8) of the various microshutters (2) in the matrix, are suitable for realizing the electrical partitioning of the petals (8) and/or the respective electrodes (6).

## Patentansprüche

1. Elektrostatische Mikroverschluß-Matrix mit einer hohen Füllfaktorgruppe, die eine Mehrzahl elektrostatisch gesteuerter Mikroverschlüsse (2) beinhaltet, die in einer Matrix mit Reihen und einer oder mehreren Spalten angeordnet sind, wobei jeder Mikroverschluß aufweist:
einen feststehenden Träger (4) mit
einem Substrat (5) in Form einer dünnen Platte,
eine Elektrode (6), die aus einer dünnen Folie elektrisch leitenden Materials gebildet ist, die auf eine Seite der dünnen Platte aufgebracht ist, die das Substrat (5) bildet,
eine dielektrische oder ferroelektrische, isolierende Folie (7), die über der Folie aufgebracht ist, die die genannte Elektrode (6) bildet, und
ein bewegliches Blättchen (8), das aus einer dünnen Folie elektrisch leitenden und elastisch verformbaren Materials gebildet ist, wobei nur der Teil an einem Ende starr mit der genannten isolierenden Folie (7) verbunden ist,
wobei das genannte Blättchen (8) einen unverformten Ruhezustand, wo lediglich der genannte Teil am einen Ende des Blättchens (8) mit dem betreffenden Substrat (5) in Berührung ist, während der übrige Teil des Blättchens (8) so gekrümmt ist, daß er von dem Substrat weg angehoben ist, sowie eine verformte Betriebsposition besitzt, in der aufgrund der elektrostatischen Wirkung nach Anlegen einer elektrischen Spannung zwischen der genannten Elektrode (6) und dem genannten Blättchen (8) dieses Blättchen (8) vollständig an der genannten isolierenden Folie (7) anhaftet, wobei das genannte Blättchen bereit ist, in die besagte, unverformte Ruheposition unter Einwirkung seiner Eigenelastizität zurückzukehren, wenn die Spannung zwischen der genannten Elektrode (6) und dem genannten Blättchen (8) entfernt wird,
wobei die genannten Mikroverschlüsse (2) in Reihen, eine über der anderen, angeordnet sind, wobei die Substrate der Mikroverschlüsse (2) jeder Reihe zueinander in gleicher Ebene und parallel zu den Substraten der Mikroverschlüsse der benachbarten Reihen sind.

2. Mikroverschluß-Matrix nach Anspruch 1, **dadurch gekennzeichnet, daß** die dünne Platte, die das Substrat (5) bildet, aus einem Material gefertigt ist, das ausgewählt ist aus metallischem Material, Kunststoffmaterial, Glas oder Silizium.

3. Mikroverschluß-Matrix nach Anspruch 1, **dadurch gekennzeichnet, daß** das genannte Substrat (5) eine Stärke besitzt, die von wenigen Mikron bis zu wenigen Millimetern reicht.

4. Mikroverschluß-Matrix nach Anspruch 3, **dadurch gekennzeichnet, daß** die Stärke des genannten Substrates (5) zwischen 20 und 40 Mikron liegt.

5. Mikroverschluß-Matrix nach Anspruch 1, **dadurch gekennzeichnet, daß** die genannte Schicht leitenden Materials, die die Elektrode (6) bildet, durch Bedampfen, Spin-Beschichten, Siebdrucken oder Tauchen hergestellt ist und eine Stärke besitzt, die von einigen 10 bis einigen 100 Nanometer reicht.

6. Mikroverschluß-Matrix nach Anspruch 1, **dadurch gekennzeichnet, daß** die genannte isolierende Schicht (7) durch Siebdrucken, Vakuumbeschichten, Spin-Beschichten, Tauchen oder, im Falle von Silizium, durch Oxydation erhalten ist.

7. Mikroverschluß-Matrix nach Anspruch 1, **dadurch gekennzeichnet, daß** jedes Blättchen (8) aus einem gänzlich metallischen Blatt oder einem Blatt aus Silizium oder Kunststoffmaterial mit einer zusätzlichen, metallisierten Schicht gebildet ist.

8. Mikroverschluß-Matrix nach Anspruch 1, **dadurch gekennzeichnet, daß** das Mittel (9) zum Zuführen einer elektrischen Spannung zu den Elektroden (6) und zu den Blättchen (8) der verschiedenen Mikroverschlüsse (2) in der Matrix dazu geeignet ist, dielektrische Abtrennung der Blättchen (8) und/oder der betreffenden Elektroden (6) zu bewirken.

## Revendications

1. Matrice de micro-obturateurs électrostatiques ayant un groupe de facteur de remplissage élevé, comprenant une pluralité de micro-obturateurs commandés de façon électrostatique (2), disposés en une matrice comprenant des lignes et une ou plusieurs colonnes, dans laquelle chaque micro-obturateur comprend :
un support fixe (4) comprenant
un substrat (5) sous forme de plaque mince,
une électrode (6) composée d'un film mince de matériau électriquement conducteur, appliqué sur un côté de la plaque mince formant le substrat (5),
un film isolant diélectrique ou ferroélectrique (7) appliqué sur le film formant ladite électrode (6), et
un pétale mobile (8), composé d'un film mince de matériau électriquement conducteur et élastiquement déformable, dont seule la partie d'une extrémité est reliée de façon rigide audit film isolant (7),
dans lequel ledit pétale (8) a un état de repos non déformé où seule ladite partie à une extrémité du pétale (8) est en contact avec le substrat respectif (5), tandis que le reste du pétale (8) est courbé de telle façon qu'il soit soulevé et éloigné du substrat et une position déformée opérationnelle dans laquelle, du fait de l'effet électrostatique résultant de l'application d'une tension électrique entre ladite électrode (6) et ledit le pétale (8), le pétale (8) adhère complètement audit film isolant (7), ledit pétale étant prêt à revenir à ladite position de repos non déformée sous l'effet de son élasticité intrinsèque lorsque la tension entre ladite électrode (6) et ledit pétale (8) est supprimée,
dans lequel lesdits micro-obturateurs (2) sont disposés en lignes, l'une au-dessus de l'autre, les substrats des micro-obturateurs (2) de chaque ligne étant mutuellement coplanaires et parallèles aux substrats des micro-obturateurs des lignes adjacentes.

2. Matrice de micro-obturateurs selon la revendication 1, **caractérisée en ce que** la plaque mince formant le substrat (5) est faite en un matériau choisi parmi un matériau métallique, un matériau synthétique, le verre ou le silicium.

3. Matrice de micro-obturateurs selon la revendication 1, **caractérisée en ce que** ledit substrat (5) a une épaisseur allant de quelques microns à quelques millimètres.

4. Matrice de micro-obturateurs selon la revendication 3, **caractérisée en ce que** l'épaisseur dudit substrat (5) se situe entre 20 et 40 microns.

5. Matrice de micro-obturateurs selon la revendication 1, **caractérisée en ce que** ladite couche de matériau conducteur formant l'électrode (6) est réalisée par évaporation, par enduction par rotation, par impression au tamis ou par immersion et a une épaisseur allant de quelques dizaines à quelques centaines de nanomètres.

6. Matrice de micro-obturateurs selon la revendication 1, **caractérisée en ce que** ladite couche isolante (7) est obtenue par impression au tamis, par déposition sous vide, par enduction par rotation, par immersion ou, dans le cas du silicium, par oxydation.

7. Matrice de micro-obturateurs selon la revendication 1, **caractérisé en ce que** chaque pétale (8) se compose d'une feuille entièrement métallique ou d'une feuille de silicium ou de matériau synthétique avec une couche métallisée additionnelle.

8. Matrice de micro-obturateurs selon la revendication 1, **caractérisée en ce que** le moyen (9) pour appliquer une tension électrique aux électrodes (6) et aux pétales (8) des différents micro-obturateurs (2) de la matrice conviennent pour réaliser la partition électrique des pétales (8) et / ou des électrodes respectives (6).
